(19) Europäisches Patentamt / European Patent Office / Office européen des brevets

(11) **EP 3 084 414 B1**

(12) **EUROPÄISCHE PATENTSCHRIFT**

(45) Veröffentlichungstag und Bekanntmachung des Hinweises auf die Patenterteilung:
**16.08.2023   Patentblatt 2023/33**

(21) Anmeldenummer: **14799743.1**

(22) Anmeldetag: **14.11.2014**

(51) Internationale Patentklassifikation (IPC):
**G01N 29/024** (2006.01)    **G01N 29/32** (2006.01)
**G01F 1/667** (2022.01)    **G01F 1/74** (2006.01)

(52) Gemeinsame Patentklassifikation (CPC):
**G01F 1/74; G01F 1/667; G01F 1/668;**
**G01N 29/024; G01N 29/323; G01N 29/326;**
G01N 2291/0212; G01N 2291/0215;
G01N 2291/102; Y02E 50/30

(86) Internationale Anmeldenummer:
**PCT/EP2014/074627**

(87) Internationale Veröffentlichungsnummer:
**WO 2015/090761 (25.06.2015 Gazette 2015/25)**

(54) **VORRICHTUNG UND VERFAHREN ZUR BESTIMMUNG DER KONZENTRATIONEN VON KOMPONENTEN EINES GASGEMISCHES**

DEVICE AND METHOD FOR DETERMINING THE CONCENTRATIONS OF COMPONENTS OF A GAS MIXTURE

DISPOSITIF ET PROCÉDÉ POUR DÉTERMINER LA CONCENTRATION DES CONSTITUANTS D'UN MÉLANGE GAZEUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013   DE 102013114538**
**31.01.2014   DE 102014001165**

(43) Veröffentlichungstag der Anmeldung:
**26.10.2016   Patentblatt 2016/43**

(73) Patentinhaber: **Endress+Hauser Flowtec AG**
**4153 Reinach (BL) (CH)**

(72) Erfinder:
• **UEBERSCHLAG, Pierre**
**F-68300 Saint-Louis (FR)**

• **BEZDEK, Michal**
**CH-4147 Aesch (CH)**

(74) Vertreter: **Penner, Paul**
**Endress + Hauser Group Services**
**(Deutschland) AG+Co. KG**
**PatServe**
**Colmarer Straße 6**
**79576 Weil am Rhein (DE)**

(56) Entgegenhaltungen:
WO-A1-00/19176          WO-A1-2008/003627
WO-A1-2008/073672     CN-A- 103 454 344
JP-A- 2004 325 297       US-A1- 2005 143 937

**Beschreibung**

Die Erfindung bezieht sich auf eine Vorrichtung und ein Verfahren zur Bestimmung der Konzentrationen und/oder des Durchflusses von einzelnen Komponenten eines Gasgemisches, wobei das Gasgemisch durch eine Rohrleitung bzw. durch ein Messrohr strömt.

Üblicherweise kommt bei der Messung des Durchflusses von Gasgemischen durch eine Rohrleitung ein thermisches Durchflussmessgerät zum Einsatz. Um eine möglichst genaue Messung durchführen zu können, muss die Zusammensetzung des Gasgemisches bekannt sein. Hierzu ist neben dem thermischen Durchflussmessgerät ein Gasanalysator vorgesehen. Die entsprechende Gasanalyse erfolgt offline, d.h. dass eine Gasprobe wird zwecks Analyse aus dem Gasgemisch entnommen, in den Gasanalysator eingefüllt und dort anschließend analysiert. Vor Durchführung einer nachfolgenden Analyse muss der Analysator gereinigt werden. Es versteht sich von selbst, dass diese bekannte Methode im Hinblick auf die Anschaffungs- und Betriebskosten relativ kostenintensiv ist.

Die WO2008/003627A1 offenbart ein Verfahren und eine Vorrichtung zur Ermittlung zur Bestimmung der Konzentrationen und/oder des Durchflusses von einzelnen Komponenten eines Gasgemisches. Dies erfolgt hier unter der Anwendung der idealen Gasgleichung und ist eine sehr gute Methode für die Anwendung auf eine Vielzahl von Gasen in einem eingeschränkten Temperatur und Druckbereich.

Der vorliegenden Erfindung liegt daher die Aufgabe zugrunde, eine Vorrichtung und ein Verfahren zur präzisen Bestimmung der Konzentration der einzelnen Komponenten eines Gasgemisches mit drei Komponenten vorzuschlagen, welche auf einen erweiterten Druck- und Temperaturbereich anwendbar ist. Die Aufgabe wird durch die Vorrichtung nach Anspruch 1, das Verfahren nach Anspruch 17 und die Verwendung der Vorrichtung nach Anspruch 19 gelöst.

Grundsätzlich ist die reale Gasgleichung bereits mehr als einem Jahrhundert bekannt. Implementierung der realen Gasgleichung bei der Auswertung von Schallgeschwindigkeitswerten in einem Ultraschalldurchflussmessgerät ermöglicht ein Multifunktionsgerät welches in der Lage ist sowohl den Durchfluss als auch die Gaszusammensetzung zu messen und dies auch bei hohen Prozessdrücken und Prozesstemperaturen.

Insbesondere ist im Zusammenhang der vorliegenden Erfindung vorgesehen, dass es sich bei dem Gasgemisch um ein Gas handelt, das im Wesentlichen aus dem Komponenten Methan, Kohlendioxid und Wasserdampf besteht.

Derartige Gasgemische sind z.B. Biogase, wobei auch Faulgase bekanntermaßen unter die Definition eines Biogases fallen Gemäß einer vorteilhaften Ausgestaltung der Vorrichtung wird vorgeschlagen, dass die Auswerteeinheit die Konzentration des Wasserdampfes in Abhängigkeit von der Temperatur unter der Annahme einer relativen Feuchte von 100% ermittelt.

Die oben getroffene Annahme, einer Sättigung des Gasgemisches mit Wasserdampf ist in vielen Fällen zumindest näherungsweise korrekt. Insbesondere gilt dies für Biogas, das üblicherweise bei einer Temperatur von 37° C erzeugt wird. Allerdings liefert diese Näherung nicht in jedem Fall ein korrektes Ergebnis: Um den eventuell auftretenden Fehler bei der Bestimmung der Konzentration des Wasserdampfes zu minimieren, ist gemäß einer vorteilhaften Weiterbildung der Vorrichtung eine Feuchtemesseinheit vorgesehen, die die relative Feuchte des in der Rohrleitung strömenden Gasgemisches misst; anschließend bestimmt die Auswerteeinheit die Konzentration bzw. den Volumenanteil des Wasserdampfes in Abhängigkeit von der Temperatur und der gemessenen relativen Feuchte.

Da auch der Druck des in der Rohrleitung strömenden Gasgemisches einen Einfluss auf die Konzentration des Wasserdampfs in dem Gasgemisch hat, ist gemäß einer Weiterbildung der Vorrichtung ein Drucksensor vorgesehen, der den Absolutdruck des in der Rohrleitung strömenden Gasgemisches bestimmt; die Auswerteeinheit berücksichtigt den gemessenen Absolutdruck bei der Bestimmung der Konzentration des Wasserdampfes in dem Gasgemisch.

In einer bevorzugten Anwendung der Vorrichtung handelt es sich bei der Rohrleitung um ein Ableitrohr für Biogas, wobei das Ableitrohr im oberen Bereich eines Fermenters, in dem sich Biomaterial befindet, angeordnet ist.

Um die Effektivität einer Biogas-Anlage zu ermitteln und zu überwachen, ist es notwendig, den aktuellen Durchfluss und die aktuelle Konzentration der wesentlichen Komponenten des Biogases zu kennen. So bestimmt der Prozentanteil von Methan in dem Gasgemisch den Energiegehalt des Biogases, während der Anteil des Methans in dem Biogas verknüpft mit dem Durchfluss eine Größe ist, die die Energieerzeugung bzw. den Energiegewinn der Biogas-Anlage charakterisiert. Weiterhin ist das Verhältnis von Methan zu Kohlendioxid eine wichtige Regelgröße für den in dem Fermenter ablaufenden Prozess; dieses Verhältnis kann beispielsweise zur Steuerung der Prozess-Temperatur und/oder zur Steuerung der Beschickung des Fermenters mit neuem Biomaterial verwendet werden. Weiterhin ist die Überwachung des Anteils von Kohlendioxid in dem Biogas aufgrund bestehender Umweltschutz-Bestimmungen von großer Wichtigkeit.

Gemäß einer bevorzugen Ausgestaltung des Verfahren ist das Ultraschall-Durchflussmessgerät so ausgestaltet, dass es die Strömungsgeschwindigkeit bzw. den Volumendurchfluss des in der Rohrleitung strömenden Gases nach dem Doppler- oder nach dem Laufzeitdifferenz-Prinzip ermittelt. Bei dem Ultraschall-Durchflussmessgerät handelt es sich entweder um ein Inline-Durchflussmessgerät oder um ein Clamp-On Durchflussmessgerät.

Ultraschall-Durchflussmessgeräte, die nach der Laufzeitdifferenz-Prinzip arbeiten, weisen zumindest ein Paar von Ultraschallsensoren auf, die die Ultraschall-Messsignale entlang definierter Schallpfade durch das in der Rohrleitung strömende Gasgemisch alternierend aussenden und/oder empfangen. Eine Regel-/Auswerteeinheit ermittelt den Volumen- und/oder den Massedurchfluss des Gasgemisches anhand der Differenz der Laufzeiten der Messsignale in Strömungsrichtung und entgegen der Strömungsrichtung des Gasgemisches. Der wesentliche Vorteil der Vorrichtung ist darin zu sehen, dass die Information über den Durchfluss und die Zusammensetzung des im wesentlichen aus drei Komponenten zusammen-gesetzten Biogases inline und kontinuierlich bereitgestellt werden kann.

Bei Inline-Durchflussmessgeräten sind die Ultraschallsensoren fest in entsprechenden Ausnehmungen in der Wandung eines Messrohrs integriert. Zwecks Montage wird das Messrohr mittels Flanschen in die Rohrleitung eingesetzt. Bei Clamp-On-Durchflussmessgeräten werden die Ultraschall-sensoren von außen auf die Rohrleitung montiert; sie messen den Volumen- bzw. Massedurchfluss des Gasgemisches in der Rohrleitung durch die Rohrwand hindurch.

Ultraschall-Durchflussmessgeräte der zuvor beschriebenen Art, die den Volumen- oder den Massedurchfluss ermitteln, werden vielfach in der Prozess- und Automatisierungstechnik eingesetzt. Clamp-On-Durchfluss-messgeräte haben den Vorteil, dass sie es ermöglichen, den Volumen- oder Massedurchfluss in einem Behältnis, z.B. in einer Rohrleitung, ohne Kontakt mit dem Medium zu bestimmen. Clamp-On-Durchflussmessgeräte sind beispielsweise in der EP 0 686 255 B1, der US-PS 4,484,478, DE 43 35 369 C1, DE 298 03 911 U1, DE 4336370 C1 oder der US-PS 4,598,593 beschrieben.

Bei beiden Typen von Ultraschall-Durchflussmessgeräten werden die Ultraschall-Messsignale unter einem vorgegebenen Winkel in die Rohrleitung, in der das fluide Medium strömt, eingestrahlt bzw. aus der Rohrleitung ausgestrahlt. Bei Ultraschall-Durchflussmessgeräten ist die jeweilige Position der Ultraschallwandler am Messrohr (Inline) bzw. an der Rohrleitung (Clamp-On) abhängig vom Innendurchmesser des Messrohres und von der Schallgeschwindigkeit des Mediums. Bei Clamp-On-Durchflussmessgeräten müssen zusätzlich die Applikationsparameter: Wandstärke der Rohrleitung und Schallgeschwindigkeit des Materials der Rohrleitung berücksichtigt werden.

Üblicherweise sind bei beiden Typen von Ultraschall-Durchflussmessgeräten die Ultraschallsensoren so angeordnet, dass die Schallpfade durch den Zentralbereich der Rohrleitung bzw. des Messrohres geführt sind. Der ermittelte Volumen- oder Massedurchfluss spiegelt somit den mittleren Durchfluss des Mediums durch die Rohrleitung. Bei vielen Anwendungen, insbesondere bei Durchflussmessungen in Rohrleitungen mit großen Nennweiten, ist diese Mittelung jedoch zu ungenau. Aus dem Stand der Technik ist es bekannt geworden, mehrere Sensorpaare über den Umfang verteilt an dem Messrohr bzw. an der Rohrleitung vorzusehen, wodurch die Durchflussinformation aus verschiedenen segmentierten Winkelbereichen des Messrohres bzw. der Rohrleitung zur Verfügung steht.

Die wesentliche Komponente eines Ultraschallsensors ist ein piezo-elektrisches Element. Die wesentliche Komponente eines piezoelektrischen Elements ist eine piezokeramische Schicht, bei der es sich um eine Folie oder um eine Membran handelt. Die Piezokeramik ist zumindest in einem Teilbereich metallisiert. Durch Anlegen eines elektrischen Anregungssignals wird die piezoelektrische Schicht in Resonanzschwingung versetzt, und Ultraschall-Messsignale werden ausgesendet. Bei dem empfangenden Ultraschallsensor werden die Ultraschall-Messsignale in ein elektrisches Signal umgesetzt.

Gemäß einer vorteilhaften Ausgestaltung der Vorrichtung ermittelt die Auswerteeinheit anhand der zuvor bestimmten Konzentrationen und der Molekulargewichte der einzelnen Komponenten des Gasgemisches bzw. des Biogases und anhand der ermittelten Strömungsgeschwindigkeit den Volumen- oder Massedurchfluss von zumindest einer der Komponenten des Gasgemisches bzw. des Biogases.

Bevorzugt ermittelt die Auswerteeinheit den Energiefluss bzw. die Energie-produktion des Biogases unter Berücksichtung der ermittelten Konzentrationen der einzelnen Komponenten und dem Volumendurchfluss des Biogases in der Rohrleitung.

Weiterhin ist eine Anzeigeeinheit vorgesehen, die eine Meldung ausgibt, wenn der Energiefluss bzw. die Energieproduktion des Biogases einen vorgegebenen minimalen Grenzwert unterschreitet.

Es ist von Vorteil, wenn das Durchflussmessgerät eine Regel-/Auswerteschaltung aufweist und dass ein Schaltkreis des Temperatursensors in der Regel-/Auswerteschaltung integriert vorliegt.

Es ist zudem von Vorteil, wenn das Messrohr eine mechanische Schnittstelle, insbesondere ein Bohrloch oder ein Anschlussstutzen, zur Festlegung eines Drucksensors am oder im Messrohr aufweist. Grundsätzlich kann eine Druckmessung vor oder hinter dem Durchflussmessgerät erfolgen. Die vorliegende Anordnung ermöglicht dem Anwender jedoch eine Druckmessung am Ort der Durchflussmessung durch Installation eines Druckmessgerätes. Diese Option steht dem Anwender zur Verfügung. Ein Druckmessgerät muss dabei nicht zwingend schon in der Schnittstelle eingesetzt sein.

Es ist von Vorteil, wenn das Messrohr einen Drucksensor aufweist, welcher insbesondere über die Schnittstelle gemäß Anspruch am oder im Messrohr festgelegt ist und dass der Datentransfer zwischen dem Drucksensor und der Regel-/Auswerteschaltung über eine analoge oder digitale Schnittstelle, insbesondere ein 4...20 mA Datentransfertschnittstelle oder eine Hart-Datentransfertschnittstelle, erfolgt. Dadurch wird es den Transmittern des Durchflussmessgerätes und des Drucksensors ermöglicht miteinander zu kommunizieren.

Die Auswerteeinheit nimmt vorteilhaft die Ermittlung der unbekannten Konzentrationen des Gasgemisches vor unter Berücksichtigung der Art der Gaskomponenten, welche als Eingabewerte zur Verfügung gestellt werden. Diese Eingabewerte können als a priori bekannte Daten vom Kunden bereitgestellt werden.

Eine besonders vorteilhafte Ausgestaltung der Vorrichtung sieht eine Steuer-/Regeleinheit vor, die die Temperatur des Fermenters und/oder die Beschickung des Fermenters mit Füllmaterial so steuert, dass der Energiefluss bzw. die Energieproduktion des Biogases einen im wesentlichen konstanten Wert annimmt. Hierdurch lässt sich der Ablauf des Fermentationsprozesses optimieren. Bevorzugt werden zu diesem Zweck die bereits an vorhergehender Stelle genannten Regelgrößen verwendet.

Besteht die Anlage zur Erzeugung von Biogas aus einer Vielzahl von Fermentern, so sieht eine bevorzugte Ausgestaltung der Vorrichtung vor, dass die Steuer-/Regeleinheit die Temperatur von jedem einzelnen Fermenter und/oder die Beschickung jeden einzelnen Fermenters mit Füllmaterial derart steuert, dass der Energiefluss bzw. die Energie-produktion des von der Anlage erzeugten Biogases einen im wesentlichen konstanten Wert annimmt. Hierdurch wird gleichfalls eine Optimierung des Prozessablaufs erreicht.

Eine bevorzugte Ausgestaltung des Verfahrens sieht vor, dass der Energiefluss bzw. die Energieproduktion des Gasgemisches unter Berücksichtigung der Konzentrationen der einzelnen Komponenten und des Volumen- oder Massedurchflusses durch die Rohrleitung bestimmt wird.

Gerade bei höheren Drücken entfaltet ein Durchflussmessgerät welches den Durchfluss und die Einzelkomponentenkonzentration eines Gasgemisches anhand eines mathematisch-physikalischen Models für reale Gase ermittelt besondere Vorteile. Hier weichen die Konzentrationen von idealen Gasen zunehmend von den tatsächlichen Werten ab. Daher ist die Verwendung eines vorgenannten Durchflussmessgerätes bei Mediumsdrücken von mehr als 10 bar, insbesondere mehr als 20 bar besonders bevorzugt.

Die Erfindung wird anhand der nachfolgenden Figuren näher erläutert. Es zeigt:

Fig. 1: einen Längsschnitt durch eine erste Ausführungsform des Ultraschall-Durchflussmessgeräts,
Fig. 2: einen Längsschnitt durch eine zweite Ausführungsform des Ultraschall-Durchflussmessgeräts
Fig. 3: einen Längsschnitt durch einen Ultraschallsensor, der in Verbindung mit der in Fig. 1 gezeigten Ausführungsform eingesetzt wird,
Fig. 4: einen Längsschnitt der in Fig. 2 gezeigten Ausgestaltung eines Temperatur- und Feuchtesensors,
Fig. 5: Schaltanordnung des Ultraschall-Durchflussmessgerätes;
Fig. 6: eine schematische Darstellung der Anordnung der Vorrichtung an einem Fermenter;
Fig. 7: schematischer Ablauf zur Analyse binärer Gasgemische, der keinen Teil der beanspruchten Erfindung bildet.
Fig. 8: schematischer Ablauf zur Analyse ternärer Gasgemische;
Fig. 9: Messdiagramm;
Fig. 10: Modelldarstellung einer iterativen Lösung; und
Fig. 11: Modelldarstellung eines inversen Modells, die keinen Teil der beanspruchten Erfindung bildet.

Der Einsatz von Ultraschall-Durchflussmessgeräten 21 zur Bestimmung des Volumen- oder Massedurchflusses Q eines gasförmigen oder flüssigen Mediums durch eine Rohrleitung 1 auf der Basis des Laufzeitdifferenzprinzips ist allgemein bekannt. Als Referenz sei auf das von T. Stauss heraus-gegebene Handbuch (ISBN 3-9520220-4-7) verwiesen. Ausführliche Information findet sich auch in dem von der von der Anmelderin heraus-gegebenen 'Durchfluss-Fibel'. Darüber hinaus werden von der Anmelderin Ultraschall-Durchflussmessgeräte unter der Bezeichnung PROSONIC FLOW angeboten und vertrieben.

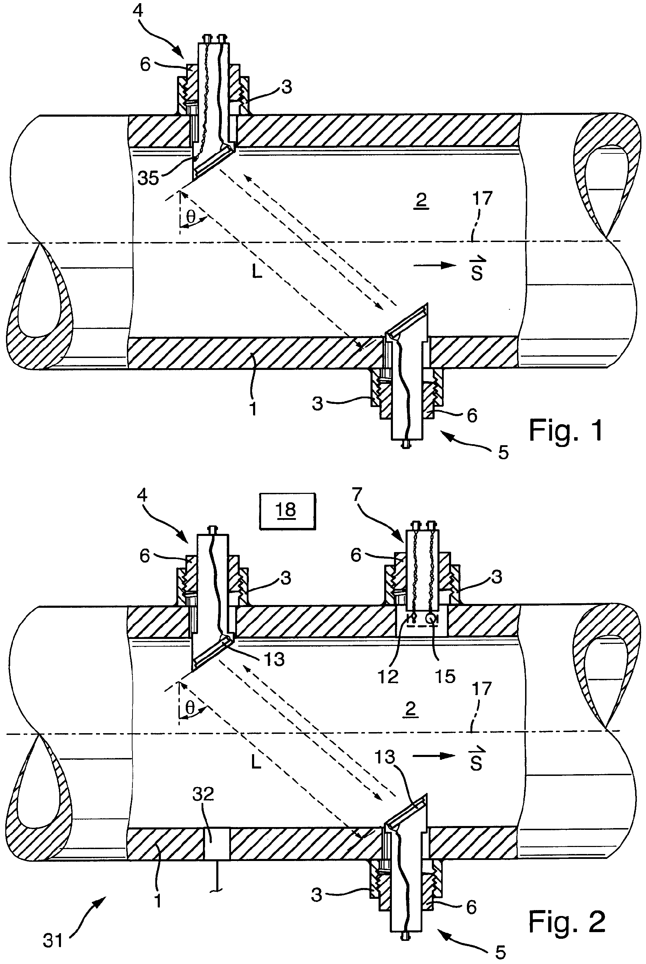

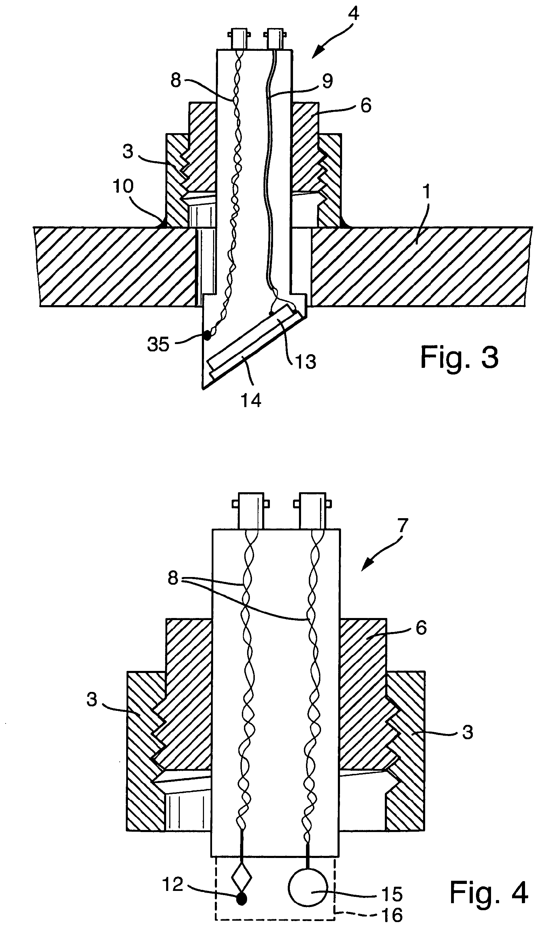

Die Figuren Fig. 1 und Fig. 2 zeigen zwei unterschiedliche Ausgestaltungen der Vorrichtung, bei der ein Ultraschall-Durchflussmess-gerät 31 zur Analyse und zur Durchflussmessung eines Gasgemisches 2 verwendet wird. In Fig. 3 ist in Detaildarstellung der Ultraschallsensor mit integriertem Temperatursensor 4 aus Fig. 1 zu sehen. Fig. 4 zeigt in Detail-Darstellung den Temperatur-/ Feuchtesensor 7 aus Fig. 2. Der Temperatursensor kann im Ultraschallsensor integriert sein, er muss jedoch nicht zwingend im Ultraschallsensor integriert sein, da die Messung durch den integrierten Temperatursensor geringe Wärmeableitfehler aufweisen kann.

Alternativ kann die Temperatur vorbekannt sein und als Eingabewert bereitgestellt werden. So kann die Temperatur beispielsweise durch eine gesonderte Messeinheit vor dem Durchflussmessgerät ermittelt werden.

Bei den beiden Ausgestaltungen sind zur Bestimmung des Volumenstroms Q nach dem Laufzeitdifferenz-Prinzip zwei Ultraschallsensoren 4, 5 vorgesehen, wobei die beiden Ultraschallsensoren 4, 5 gegenüberliegend und axial zueinander versetzt an der Rohrleitung 1 oder an dem Messrohr befestigt sind. Alternierend senden und empfangen die beiden Ultraschallsensoren 4, 5 Ultraschall-Messsignale. Die Laufzeitdifferenz zwischen den Ultraschall-Messsignalen, die in Strömungsrichtung S und entgegen der Strömungs-richtung S ausgesendet und empfangen werden, ist ein Maß für den Volumenstrom Q des Gasgemisches 2 in der Rohrleitung 1.

Der wesentliche Unterschied bei den beiden in den Figuren Fig. 1 und Fig. 2 gezeigten Ausgestaltungen besteht darin, dass bei der in Fig. 1 gezeigten Ausgestaltung davon ausgegangen wird, dass die relative Feuchte RH des Gasgemisches 100 % beträgt oder dass die relative Feuchte vorbekannt ist und als Information dem Gerät zur Verfügung steht z.B. als Eingabewert. Somit ist die Konzentration des Wasserdampfs in dem Gasgemisch 2 nur abhängig von der Temperatur T und der entsprechende SättigungsDampfdruck kann einer Tabelle entnommen oder über eine entsprechende Formel gewonnen werden.

Um eine genauere Aussage hinsichtlich der Wasserdampf-Konzentration $x_W$ zu erhalten, ist vorteilhafter Weise ein Drucksensor 32 vorgesehen. Bei realen Gasen ist der Drucksensor insbesondere von Vorteil, da die Schallgeschwindigkeit von realen Gasen druckabhängig ist. Folglich geht der gemessene Druck in die Ermittlung der Konzentration der Gaskomponenten ein. Zudem lässt sich anhand des gemessenen, eventuell vom Normaldruck abweichenden Drucks des Gasgemisches 2 in der Rohrleitung 1 die Konzentration des Wasserdampfs $x_W$ in dem Gasgemisch 2 exakt bestimmen.

Alternativ kann der Druck auch vorbekannt sein und als Eingabewert bereitgestellt werden.

Bei der in Fig. 2 gezeigten Ausgestaltung ist zusätzlich zu dem Temperatur-sensor 7 und ggf. dem Drucksensor 32 ein Feuchtesensor 15 vorgesehen. Der Feuchtesensor 15 stellt einen Messwert hinsichtlich der aktuellen Feuchte RH in dem Gasgemisch 2 zur Verfügung. Somit lässt sich die Wasserdampf-Konzentration $x_W$ in dem Gasgemisch 2 hochgenau bestimmen. Üblicherweise ist der Feuchtesensor 15 als kapazitiver Sensor ausgestaltet. Die Fritte 16 schützt den Feuchte- und Temperatursensor 7 vor mechanischer Zerstörung; sie verhindert die Kollision mit größeren Partikeln.

In Fig. 1 und in der in Fig. 3 gezeigten Detailansicht ist dargestellt, dass der Temperatursensor 35 in einem der beiden Ultraschallsensoren 4 integriert ist. Bei dem Temperatursensor 35 handelt es sich beispielsweise um ein RTD Element, einen Thermistor, ein Thermoelement oder um ein temperatur-empfindliches Halbleiterelement. Der Temperatursensor 35 ist so in den Ultraschallsensor 4 integriert, dass er die Temperatur T des Gasgemisches 2 misst.

Der Ultraschallsensor 4 kannaus einem piezoelektrischen Element 13 und einer Anpassschicht 14 bestehen, wobei die Anpassschicht 14 die Ein- und Aus-kopplung der Ultraschall-Messsignale in das Gasgemisch 2 verbessert. Bevorzugt hat die Anpassschicht 14 eine Dicke, die einem Viertel der Wellenlänge der Ultraschall-Messsignale entspricht. Die Anpassschicht 14 ist so ausgestaltet, dass ihre akustische Impedanz zwischen der akustischen Impedanz des piezoelektrischen Elements 13 und der akustischen Impedanz des Gasgemisches 2 liegt. Die Anpassungsschicht ist jedoch für die Funktionalität des Sensors nicht zwingend erforderlich.

Die Strömungsgeschwindigkeit V des Gasgemisches 2 lässt sich anhand des Laufzeitdifferenz-Prinzips nach folgender Formel berechnen:

$$V = K \frac{L}{2\sin\theta} \cdot \frac{t_{up} - t_{dn}}{t_{up} \cdot t_{dn}} \qquad (1a)$$

Der Volumenstrom Q ergibt sich folglich aus der mathematischen Beziehung:

$$Q = A \cdot V \qquad (1b)$$

Die Schallgeschwindigkeit $C_g$ des in der Rohrleitung 1 bzw. in dem Messrohr strömenden Mediums 2 lässt sich nach folgender Formel errechnen:

$$C_g = \frac{L}{2}\left[\frac{1}{t_{up}} + \frac{1}{t_{dn}}\right] \qquad (2)$$

Hierbei charakterisieren

$t_{up}$ : die Laufzeit der Ultraschall-Messsignale in Strömungsrichtung S;

$t_{dn}$ : die Laufzeit der Ultraschall-Messsignale entgegen der Strömungsrichtung S;

K: eine das Strömungsprofil beschreibende Funktion - bei laminarer Strömung hat das Strömungsprofil üblicherweise die Form einer Parabel;

L: der Abstand zwischen den beiden Ultraschallsensoren 4, 5 bzw. die Länge des Schallpfades der Ultaschall-Messsignale zwischen den beiden Ultraschallsensoren 4, 5;

θ: der Einkoppelwinkel der Ultraschall-Messsignale in die Rohrleitung 1 bzw. in das Messrohr, wobei der Einkoppelwinkel gleich dem Auskoppelwinkel ist.

A: die Querschnittsfläche der Rohrleitung 1, die von dem Gasgemisch 2 durchströmt wird.

In einer Näherung kann im Zusammenhang die Annahme getroffen werden, dass der Wasserdampf in dem Gasgemisch 2 gesättigt ist, d.h. dass die relative Feuchte RH 100% beträgt. Somit kann die Konzentration von Wasserdampf $x_w = x_3$ mittels einer Tabelle oder einer entsprechenden Formel bestimmt werden, in der der Wasserdampfgehalt bzw. die Volumenprozent des Wasserdampfs in Abhängigkeit von der Temperatur T bei Normaldruck P aufgelistet bzw. berechenbar sind.

Die Feuchte muss allerdings nicht zwingend 100% sein. Es ist ausreichend, wenn die Feuchte bekannt ist.

| Temperatur °in Grad C | SättigungsDampfdruck Ps in mbar | Volumenprozent bei Normaldruck (1013 mb) in % |
| --- | --- | --- |
| -10 | 2.86 | 0.3 |
| 0 | 6.11 | 0.6 |
| 10 | 12.2 | 1.2 |
| 20 | 23.3 | 2.3 |
| 30 | 42.3 | 4.2 |
| 40 | 73.5 | 7.3 |
| 50 | 122.9 | 12 |
| 60 | 198.4 | 20 |
| 70 | 310.6 | 31 |
| 80 | 472.7 | 47 |
| 90 | 701.2 | 69 |
| 100 | 1013 | 100 |

Ist die Temperatur bekannt, so kann die Konzentration des Wasserdampfs $x_w$ nach folgender Formel berechnet werden:

$$x_w = \frac{P_s}{P_T}$$

Hierbei kennzeichnet:

$P_S$ = den Sättigungsdampfdruck in Abhängigkeit von der Temperatur bei Normaldruck;
$P_T$ = den Absolutdruck im Messmedium entspricht.

Ist die relative Feuchte in dem Gasgemisch nicht vorgegeben, so ist es für eine genaue Messung erforderlich, die relative Feuchte RH zu bestimmen. Eine Anordnung zur Feuchtebestimmung ist im Detail in Fig. 4 zu sehen, wo der Feuchtesensor 15 zusammen mit dem Temperatursensor 12 als kombinierter Temperatur- und Feuchtesensor 7 ausgestaltet ist. Die Konzentration des Wasserdampfs $x_W$ lässt sich mit Kenntnis der aktuellen Feuchte RH nach folgender Formel berechnen:

$$x_w = \frac{P_s \cdot RH}{P_T}$$

Diese Formel lässt sich auch anwenden, sofern der Wasserdampf im Gasgemisch nicht gesättigt ist und die relative Feuchte RH nicht ermittelt sondern als Eingabewert vorgegeben wird.

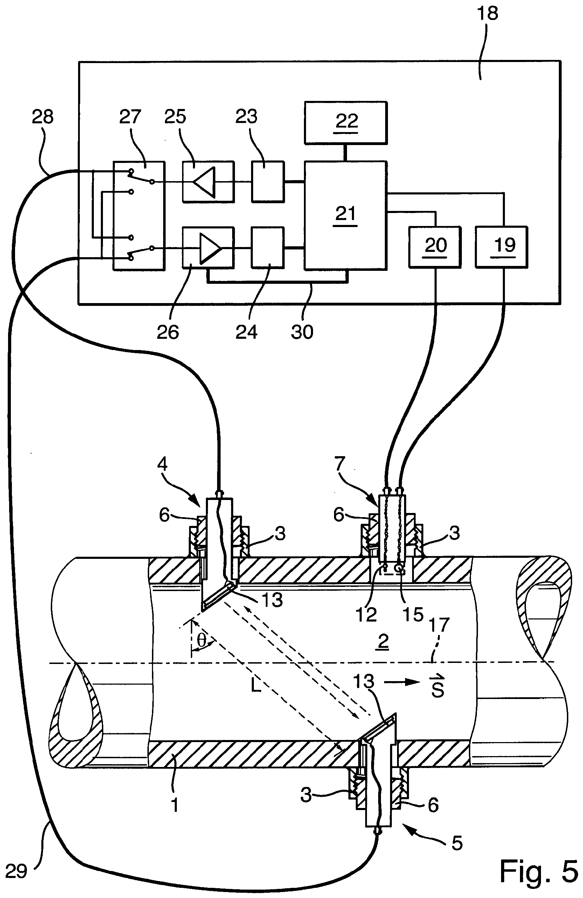

Fig. 5 zeigt die in Fig. 2 gezeigte Ausgestaltung der Vorrichtung mit zugehöriger Regel-/Auswerteschaltung 18. Üblicherweise ist die Regel-/Auswerteschaltung 18 in den sog. Transmitter des Durchflussmessgeräts 31 integriert.

Die beiden Ultraschallsensoren 4, 5 arbeiten abwechselnd als Sender und Empfänger. Die Ansteuerung der Ultraschallsensoren 4, 5 erfolgt über den Multiplexer 27. In Fig. 5 ist der Fall dargestellt, dass der Ultraschallsensor 4 als Sender und der Ultraschallsensor 5 als Empfänger arbeitet. Über den Generator 23 und den Sendeverstärker 25 wird ein elektrisches Anregungs-signal an das piezoelektrische Element 13 des Ultraschallsensors 4 angelegt. Die Anregung des piezoelektrischen Elements 13 erfolgt bei dessen Resonanzfrequenz. Der Ultraschallsensor 4 wird so angesteuert, dass er ein kurzes impulsförmiges Ultraschall-Messsignal aussendet. Die optimale Frequenz eines Ultraschall-Messsignals liegt im Bereich zwischen 50 kHz und 500 kHz.

Nach einer kurzen Laufzeit empfängt der Ultraschallsensor 5 den Schallimpuls. Das piezoelektrische Element 13 des Ultraschallsensors 5 wandelt den Schallimpuls in ein elektrisches Signal; dieses elektrische Signal wird zum Empfangsverstärker 26 geführt. Die gewünschte Verstärkung wird über einen Rückkoppelkreis 30 geregelt. Das verstärkte Empfangssignal wird über einen Analog-/Digital Wandler 24 in eine digitales Signal umgewandelt und der Auswerteeinheit 21 zur weiteren Bearbeitung und Auswertung zur Verfügung gestellt. Die Auswerteeinheit 21 errechnet die Laufzeit $t_{dn}$ des Schallimpulses auf dem Schallpfad vom Ultraschallsensor 4 zum Ultraschall-sensor 5.

Anschließend werden die Ultraschallsensoren über den Multiplexer 27 so angesteuert, dass nunmehr der Ultraschallsensor 5 als Sender und der Ultraschallsensor 4 als Empfänger arbeitet. In der zuvor beschriebenen Weise ermittelt die Auswerteeinheit 21 die Laufzeit $t_{up}$, die der Schallimpuls benötigt, um den Schallpfad zwischen dem Ultraschallsensor 5 und dem Ultraschall-sensor 5 zu durchlaufen.

In einer der Auswerteeinheit 21 zugeordneten Speichereinheit ist Information über die Funktion K abgespeichert, die das Strömungsprofil bzw. die Geometrie des Messrohrs bzw. der Rohrleitung 1 in Abhängigkeit von der Strömungsgeschwindigkeit V zumindest in einer Vielzahl der Anwendungsfälle hinreichend genau beschreibt. Wie bereits an vorhergehender Stelle erwähnt, lässt sich die Funktion K auch messtechnisch bestimmen. Hierzu ist es erforderlich, dass mehr als ein Paar von Ultraschallsensoren 4, 5 an dem Messrohr bzw. an der Rohrleitung 1 vorgesehen sind.

Anhand der gemessenen Laufzeiten $t_{dn}$, $t_{up}$ - ggf. gemittelt über mehrere Messzyklen - und anhand der abgespeicherten, das Strömungsprofil beschreibenden Funktion K bestimmt die Auswerteeinheit 21 über die Gleichung (1a), die Gleichung (1b) und die Gleichung (2) die Strömungsgeschwindigkeit V, den Volumendurchfluss Q und die Schallgeschwindigkeit $C_g$ des Gasgemisches 2.

Die von dem Temperatursensor 35 und ggf. von dem Feuchtesensor 15 gemessenen Temperaturwerte bzw. Feuchtewerte werden von dem Temperaturschaltkreis 20 bzw. dem Feuchteschaltkreis 19 an die Auswerteeinheit 21 weitergeleitet.

Wie in Fig. 5 dargestellt sind der Temperaturschaltkreis und der Feuchtesensorschaltkreis in der Regel-/Auswerteschaltung 18 integriert. Analog kann auch ein optionaler Druckschaltkreis in der Regel-/Auswerteschaltung integriert sein. Allerdings müssen die vorgenannten Schaltkreise der Sensoren nicht zwingend in der Regel-/Auswerteschaltung 18 integriert sein, sondern autonome Schaltkreise mit eigenen Transmittern sein, die mit dem Transmitter des Durchflussmessgerätes über jeweils eine Schnittstelle kommunizieren.

So ist auch eine Kombination von mit der Regel-/Auswerteschaltung 18 integrierten Schaltkreisen, autonomen Schaltkreisen und vorgegebenen Eingabewerte für Temperatur, Druck und Feuchte möglich.

Optional können noch Sensoren vorgesehen sein, z.B. zur Bestimmung Dichte, Viskosität oder Gassensoren für bestimmte Gase ($CO_2$, $H_2S$, ... Sensoren).

Die Auswerteeinheit 21 löst errechnet unter Verwendung der gemessenen Schallgeschwindigkeit $C_g$ und der weiteren bekannten Größen die Volumenanteile der drei wesentlichen Komponenten des Gasgemisches. Weiterhin stellt die Auswerteeinheit 21 Information über den Volumendurchfluss der einzelnen Komponenten des Gasgemisches 2 zur Verfügung. Die Werte werden auf der Anzeigeeinheit 22 angezeigt oder über entsprechende Verbindungsleitungen an eine übergeordnete Prozessleitstelle geführt.

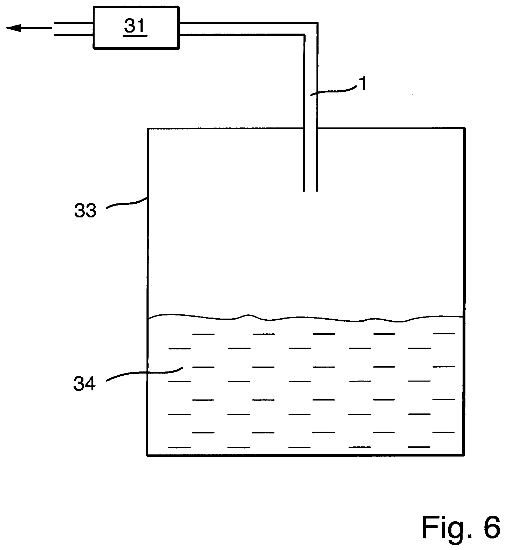

Fig. 6 zeigt die Anordnung der Vorrichtung an einem Fermenter 33 in einer Anlage zur Erzeugung von Biogas. In dem Fermenter 33 befindet sich das Befüllmaterial 34. Hierbei handelt es sich um organische Stoffe, insbesondere um Speisereste, Silageeintrag und Jauche. Der Fermentationsprozess erfolgt bei einer vorgegebenen Temperatur. Das gewonnene Biogas wird über das Ableitrohr 1 in einen in Fig. 6 nicht gesondert dargestellten Gasspeicher geleitet. In dem Ableitrohr 1 ist das Ultraschall-Durchflussmessgerät 31 montiert.

Bevorzugt ermittelt die Auswerteeinheit 21 den Energiefluss bzw. die Energie-produktion des Biogases unter Berücksichtung der ermittelten Konzentration der einzelnen Komponenten und der Strömungsgeschwindigkeit V des Biogases in der Rohrleitung 1. Eine Meldung wird ausgegeben, wenn der Energiefluss bzw. die Energieproduktion des Biogases einen vorgegebenen minimalen Grenzwert unterschreitet.

Die Regel-/Auswerteeinheit 21 stellt Regelgrößen zur Verfügung, über die die Temperatur in dem Fermenter 33 und/oder die Beschickung des Fermenters 33 mit Füllmaterial 34 geregelt wird. Insbesondere wird der Fermentationsprozess in dem Fermenter 33 so gesteuert, dass der Energiefluss bzw. die Energieproduktion des Biogases einen im wesentlichen konstanten Wert annimmt. Hierdurch lässt sich der Ablauf des Fermentationsprozesses optimieren.

Besteht die Anlage zur Erzeugung von Biogas aus einer Vielzahl von Fermentern 33, so regelt die Vorrichtung 31 die Temperatur von jedem einzelnen Fermenter 33 und/oder die Beschickung jeden einzelnen Fermenters 33 mit Füllmaterial 34 derart, dass der Energiefluss bzw. die Energieproduktion des von der Anlage erzeugten Biogases einen im wesentlichen konstanten Wert annimmt. Hierdurch wird gleichfalls eine Optimierung des Prozessablaufs in der Biogas-Anlage erreicht.

Nachfolgend soll das Konzept der Erfindung nochmals im Detail näher erläutert werden.

Die vorbeschriebenen Fig. 1-6 beschreiben in erster Linie Anwendungen für feuchte Gase. Hier können bei bekannter Feuchte die Zusammensetzung und die Konzentration der Einzelkomponenten eines tenären Gasgemisches bestimmt werden.

Es ist jedoch losgelöst von dieser Anwendung auch möglich die unbekannten Konzentration $x_1$ und $x_2$ von zwei Einzelkomponenten einer beliebigen Gasmischung zu bestimmen. So kann die Zusammensetzung eines binären Gasgemisches bestimmt werden. Ternäre Gasgemische können dann bestimmt werden wenn die Konzentration einer dritten Einzelkomponente $x_3$ bekannt ist. Bei quarternären Gasgemischen müssen die Konzentration von zwei Gaskomponenten bekannt sein, um die Gaszusammensetzung zu bestimmen. Entsprechend lässt sich bei einem mit n-Komponenten die Zusammensetzung bestimmen, wenn die Konzentrationen von n-2 Gaskomponenten vorgegeben oder ermittelt sind.

Ermitteln heißt in diesem Zusammenhang z.B. die aktive Messung einer Gaskonzentration oder die indirekte Bestimmung der Gaskonzentration durch einen ermittelten oder berechneten RH-Wert oder einen tau-Punkt.

Ein Beispiel einer tenären Gasmischung ist das Biogas, wobei die eine bekannte Konzentration die Konzentration des Wasserdampfes ist, welche mittels des RH-Wertes und der Temperatur ermittelt wird. Dies wurde bereits im Detail vorher beschrieben.

Für die Gasanalyse wird ein Ultraschall-Durchflussmessgerät verwendet, um die Anteile (in % mol und/oder % vol) der einzelnen bekannten Gaskomponenten zu bestimmen. Die bekannten Anteile können im nächsten Schritt an den Kunden ausgegeben werden. Ausserdem dienen sie zur Berechnung von diversen Eigenschaften der Gasmischung wie z.B. Dichte, Normdichte und Viskosität, die ebenfalls ausgegeben werden können oder zur Berechnung von abgeleiteten Grössen wie z.B. Massefluss, Normvolumenfluss und Reynoldszahl benutzt werden.

Beim idealen Gas sind die Anteile in %vol und in %mol identisch. Bei realen Gasen sind %vol und %mol zu unterscheiden.

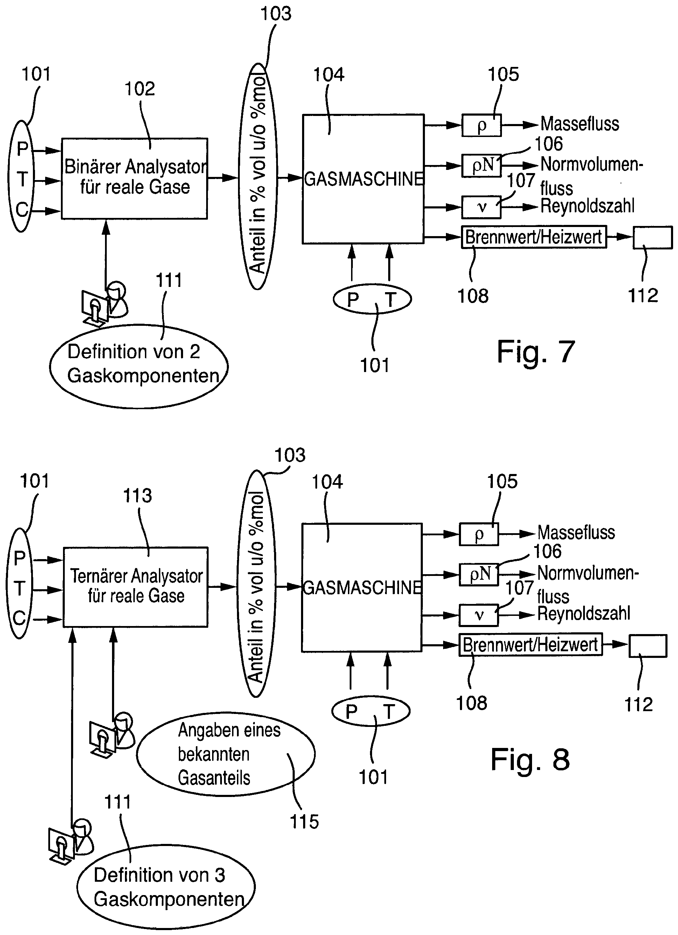

In Fig. 7 ist ein schematischer Ablauf zur Analyse binärer Gasgemische dargestellt, der keinen Teil der beanspruchten Erfindung bildet.

Ausgehend von den Eingangswerten des Druckes, der Mediumstemperatur und der Schallgeschwindigkeit des Gasgemisches können nach Vorgabe, dass die Anzahl der Gaskomponenten zwei beträgt, in einem Analysator die Anteile in vol.% ider mol% berechnet werden. Hierzu nutzt der Analysator die reale Gasgleichung. Bei Eingabe dieser Anteile in eine Rechenmaschine für kann eine Datenverabeitungseinheit bei bekannter Temperatur und bekanntem Druck des Gasgemisches verschiedene Werte ermittelt werden. Diese Werte sind der Massefluss, der Normvolumenfluss, die Reynoldszahl und der Brennwert/Heizwert.

In Fig. 7 erfolgt zunächst die Ermittlung der Anteile der Gaskomponenten 103 in mol% oder vol%. Dies wird durch einen binären Analysator für reale Gase 102 ermöglicht. Eingabewerte für die Analysator 102 sind Prozessgroßen 101. Dies sind im konkreten Fall der Druck P, die Temperatur T und die Schallgeschwindigkeit c. Zudem muss die Vorgabe 111 erfolgen, um welche zwei Gase es sich handelt. Z.B. $CO_2$ und Methan.

Die Eingabewerte 101 können ermittelt oder vorgegeben werden

Im Anschluss erfolgt die Berechnung von Eigenschaften des ermittelten Gasgemisches. Dies erfolgt mittels eines mathematisch-physikalischen Modelles 104 für reale Gase unter Verwendung der Anteile der Gaskomponenten und der Prozessgrößen 101, hier nur des Druckes P und der Temperatur T. Die ermittelten Eigenschaften sind vorzugsweise, jedoch nicht abschließend, die Dichte des Gasgemisches 105 unter Betriebsbedingungen, die Dichte des Gasgemisches 106 unter Norm/Standardbedingungen 106, die kinematische oder dynamische Viskosität des Gasgemisches 107 und der Brennwert/Heizwert des Gasgemisches 108.

Aus den ermittelten Eigenschaften 105-108 können weitere Prozessgrößen 112 berechnet werden, insbesondere, jedoch nicht abschließend, Massefluss, Normvolumenfluss, Reynoldszahl und Energiefluss (Leistung).

In Fig. 8 ist ein schematischer Ablauf zur Analyse tenärer Gasgemische dargestellt. Ausgehend von den Eingangswerten des Druckes, der Mediumstemperatur und der Schallgeschwindigkeit des Gasgemisches können nach Vorgabe, dass die Anzahl der Gaskomponenten drei beträgt, in einem Analysator die Anteile in vol.% ider mol% berechnet werden. Zuvor muss allerdings der Anteil der dritten Gaskomponente vorgegeben oder ermittelt werden. Hierzu nutzt der Analysator die reale Gasgleichung. Bei Eingabe dieser Anteile in eine Rechenmaschine für kann eine Datenverabeitungseinheit bei bekannter Temperatur und bekanntem Druck des Gasgemisches verschiedene Werte ermittelt werden. Diese Werte sind der Massefluss, der Normvolumenfluss, die Reynoldszahl und der Brennwert/Heizwert.

Im Unterschied zu Fig. 7 zeigt Fig. 8 eine Auswertung eines tenären Gasgemisches unter Verwendung eines tenären Analysators für reale Gase 113. Neben den einzugebenen Prozessgrößen 101 müssen zudem die drei Gaskomponenten definiert werden, so z.B. Wasser, $CO_2$ und Methan (für Biogasanwendungen). Darüber hinaus muss auch eine Konzentration einer Gaskomponente 115 bekannt oder ermittelt worden sein.

Am besonderen Beispiel von Biogas erfolgt nicht die direkte Angabe von Wasserdampf in vol.%, sondern die Wasserdampfkonzentration kann durch Ermittlung aus der Relativfeuchte (angegeben oder gemessen) und der Temperatur (angegeben oder gemessen) erfolgen. Dies wurde zuvor beschrieben.

Die anschließende Ermittlung der zusätzlichen Prozessgrößen 112 erfolgt analog zu Fig. 7.

Ein Beispiel für eine ternäre Gasmischung ist das Biogas und seine Varianten (Klärgas oder Faulgas, Deponiegas) sowie das Grubengas (Kohlegas) besser bekannt als Coal Seam Gas oder Coal Bed Methane. Diese Gase bestehen hauptsächlich aus Methan, Kohlendioxid und Wasserdampf. In diesem Fall werden die Anteile von Methan und Kohlendioxid durch den Analysator bestimmt und der Anteil von Wasserdampf wird mit Hilfe der vom Kunden angegebenen Relativfeuchte in % (RH) und des Temperaturwertes berechnet.

Der Analysator verwendet zur Bestimmung der Gasanteile die Schallgeschwindigkeit c, die von einem Ultraschall-Durchflussmessgerät ohne Weiteres gemessen werden kann, den Prozessdruck P und die Prozesstemperatur T. Für die Bestimmung von P (Druck) und T (Temperatur) gibt es drei Möglichkeiten:

- Direkte Messung durch integrierte P/T-Sensoren,
- Einlesen der durch externe P/T-Sensoren gemessenen Werte mittels analoger oder digitalen Schnittstellen,
- Eingabe von konstanten Werten durch den Kunden.

Der bisherige Stand der Technik geht von der Annahme aus, dass die Gasmischung sich als ideales Gas verhält. Damit ist es möglich, die einfachen physikalischen Modelle wie z.B. die thermische Zustandsgleichung idealer Gase zu verwenden. In dieser "idealen Welt" gilt für alle Gase: die Schallgeschwindigkeit ist unabhängig vom Prozessdruck und steigt mit Wurzel der Prozesstemperatur.

Die Annahme des idealen Gases bleibt nur in einem begrenzten Druck- und Temperaturbereich gültig. Ausserhalb von diesem Bereich sind die physikalischen Modelle für ideales Gas ungenau und eignen sich nicht für ein Messgerät, das eine hohe Messgenauigkeit erreichen soll. Je nach Gas ist der Gültigkeitsbereich kleiner oder grösser. So ist z.B. das Kohlendioxid, ein fester Bestandteil von Biogasen, ein stark "nicht-ideales" Gas, bei dem schon ab einem Prozessdruck von 10 bar relevante Abweichungen zum idealen Gas auftreten.

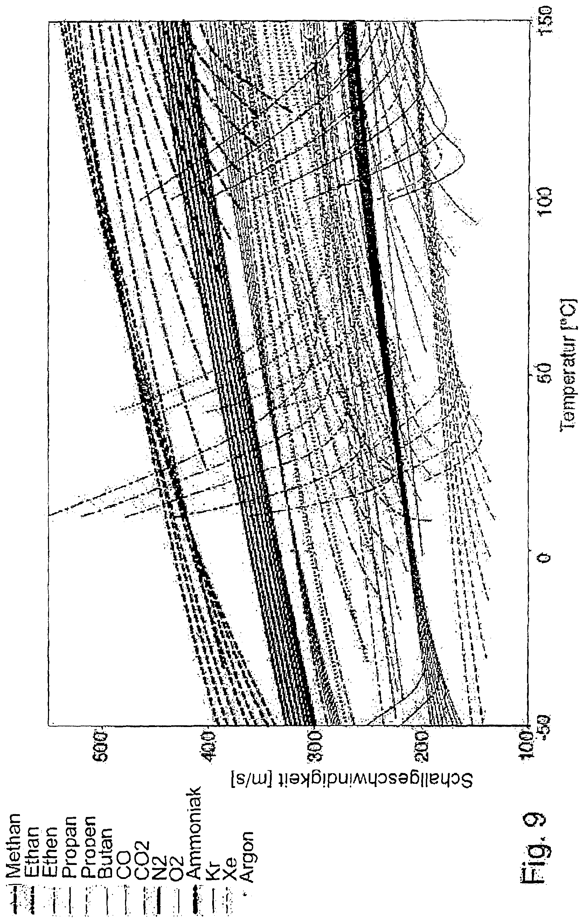

In der Welt der realen Gase verhalten sich alle Gase unterschiedlich insbesondere wenn grosse Druck- und Temperaturbereiche betrachtet werden. Die Schallgeschwindigkeit eines realen Gases ist abhängig sowohl von der Prozesstemperatur als auch vom Prozessdruck. Diese Abhängigkeiten sind komplex und unterscheiden sich von Gas zu Gas, wie man im Diagramm der Fig. 9 sehen kann:

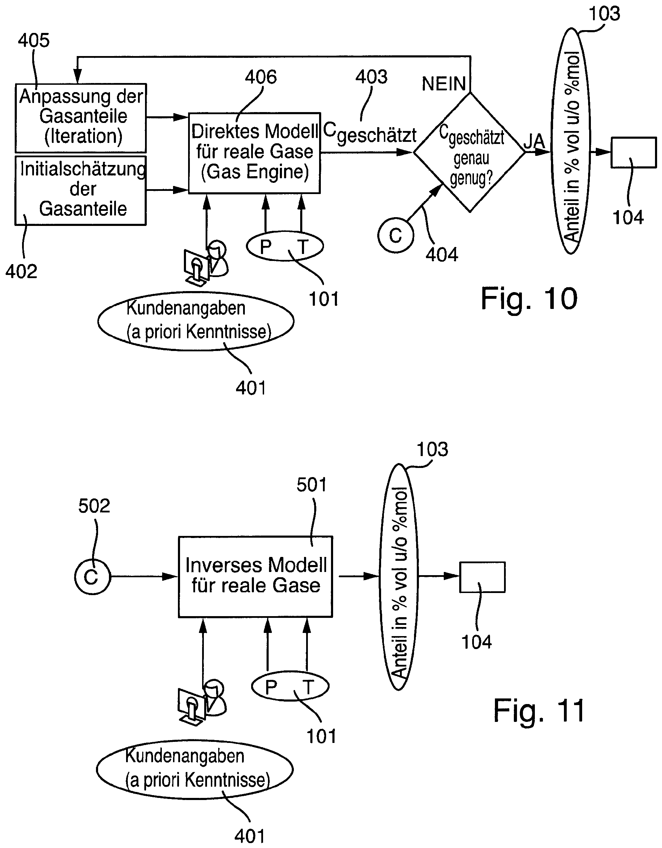

Fig. 10 zeigt eine Modelldarstellung einer iterativen Lösung wie sie z.B in einem binären Analysator 102 umgesetzt wird. Die mathematisch-physikalischen Grundlagen für eine Interative Annäherung von beliebige Messgrößen sind dem Fachmann wohlbekannt. Die in Fig. 10 dargestellten Kundenangaben 401 beziehen sich darauf um welche Gaskomponente es sich in Gasgemisch handelt und beispielsweise bei Gasgemischen mit n-Komponenten um die erforderliche Konzentrationen der n-2 Gaskomponenten.

Im Fall der Fig. 10 erfolgt eine Initialschätzung 402 der Gasanteile eines zu messenden Gasgemisches, sowie die Eingabe von Druck und Temperatur des Mediums, die z.B. durch Messung ermittelt sind. Durch Berechnung wird eine Schallgeschwindigkeit auf Grundlage der geschätzten Gasanteile 403 bereitgestellt. Diese wird mit der tatsächlich gemessenen Schallgeschwindigkeit 404 verglichen. Dann werden die Gasanteile so lange iterativ 405 angepasst, bis die berechnete Schallgeschwindigkeit mit der gemessenen Schallgeschwindigkeit übereinstimmt. Dann erfolgt eine Ausgabe der Molprozente und/oder Volumenprozente.

In dieser Variante werden die Gasanteile $X_i$ somit mit Hilfe eines iterativen Prozesses bestimmt. Dieser Prozess führt eine Minimierung des Fehlers der geschätzten Schallgeschwindigkeit $c_{geschätzt}$ durch. Die Palette an möglichen Minimierungsalgorithmen ist gross und reicht von klassischen Gradient-Methoden bis zu modernen Evolutionsalgorithmen. Bei der Auswahl sind allerdings Algorithmen zur Integration in den Messgeräten bevorzugt, welche eine geeignete Konvergenzgeschwindigkeit und einen geringen Rechenaufwand aufweisen.

Die Schallgeschwindigkeit $c_{geschätzt}$ wird für die aktuelle Schätzung der Gasanteile $X_{i,k}$ mit Hilfe eines direkten Modells 406 wie z.B. einer Software berechnet:

$$c_{geschätzt,k} = f(P, T, X_{i,k})$$

wobei k den Iterationsindex darstellt. Für die Beschreibung des Software-Pakets siehe "NEL40 - A FORTRAN Software Package for the Thermodynamic and Transport Properties of 40 Common Fluids and their Mixtures", TUV NEL, 2005.

In der praktischen Implementation kann der iterative Prozess als "Endlosschleife" laufen. Damit werden die ermittelten Gasanteile $X_i$ dauernd an die Änderungen in den Prozessvariablen P, T, c angepasst.

Eine zweite Variante der Analyse eines Gasgemisches, die keinen Teil der beanspruchten Erfindung bildet, wird in Fig. 11 dargestellt.

In dieser Variante wird davon ausgegangen, dass ein inverses Modell 501 für reale Gase vorhanden ist, mit dem man aus den Prozessvariablen 101 P, T, also Druck und Temperatur, und der Prozessvariable 502 c, also der Schallgeschwindigkeit, mit Hilfe der Kundenangaben (a priori Kenntnisse) direkt, also ohne Iteration, die einzelnen Gasanteile $X_i$ berechnen kann:

$$X_i = f(P, T, c)$$

Da wir annehmen müssen, dass die Herleitung eines allgemein gültigen inversen Modells sehr aufwendig oder unmöglich ist, können stattdessen dezidierte inverse Modelle entwickelt werden, die nur in einem eingeschränkten Bereich gültig sind. Je nach Anwendungsfall bzw. Kundennutzen ist es denkbar, dezidierte inverse Modelle für einen eingeschränkten Druckbereich, einen eingeschränkten Temperaturbereich und/oder nur für bestimmte Gaskomponenten zu entwickeln. Als Beispiel kann ein dezidiertes inverses Modell für Biogas als reales Gas genannt werden.

Das dezidierte Modell ändert sich von Gasgemisch zu Gasgemisch, von Temperaturbereich zu Temperaturbereich und von Druckbereich zu Druckbereich und kann auf die Kundenwünsche zugeschnitten werden.

Alternativ zur vorgenannten Bestimmung des Wasserdampfes durch die Relativfeuchte RH kann auch eine Ermittlung mittels des tau-Punktes erfolgen.

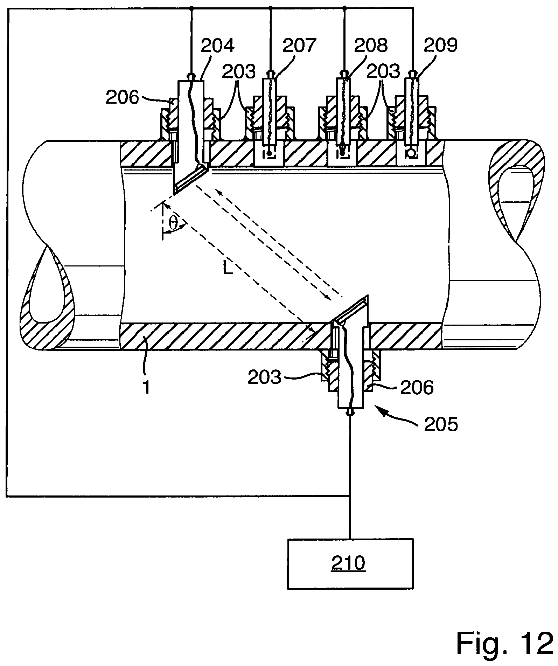

Fig. 12 zeigt eine weitere Ausführungsvariante einer erfindungsgemäßen Vorrichtung. Diese umfasst ein Messrohr 201 durch welches ein Messmedium 202, so z.B. ein tenäres Gasgemisch, geleitet wird. Am Messrohr 201 sind Sensorstutzen 203 angeordnet. Diese dienen sowohl zur Aufnahme von zwei Ultraschallwandlern 204 und 205 als auch zur Aufnahme eines Drucksensors 207, eines Temperatursensors 208 und eines optionalen Feuchtesensors 209, sofern es sich bei dem Gasgemisch im Wesentlichen um ein tenäres Gasgemisch mit Wasserdampf als eine Komponente handelt. Dabei weist ist ein Stutzen 203 für jeden der Ultraschallwandler 204, 205 und die Sensoren 207-209 vorgesehen. Diese sind in mit einem Anschlussadapter 306 verbunden, beispielsweise einen Schraubadapter, welcher in den Stutzen eingebracht werden kann. Die Sensoren sind über Datenleitungen mit einer Auswerteeinheit 210 verbunden. Selbstverständlich kann die Kommunikation zwischen den Ultraschallwandlern und/oder den Sensoren mit der Auswerteeinheit 210 auch über eine kabellose Datenleitung erfolgen.

Es können auch mehrere Auswerteeinheiten vorgesehen sein, welche miteinander kommunizieren.

Die Auswerteeinheit ermittelt aus den ermittelten Messwerten der Sensoren 207-209 und der Ultraschallwandler 204, 205 die Zusammensetzung des Gasgemisches und ggf. die Durchflussgeschwindigkeit und/oder den Volumenfluss des Gasgemisches.

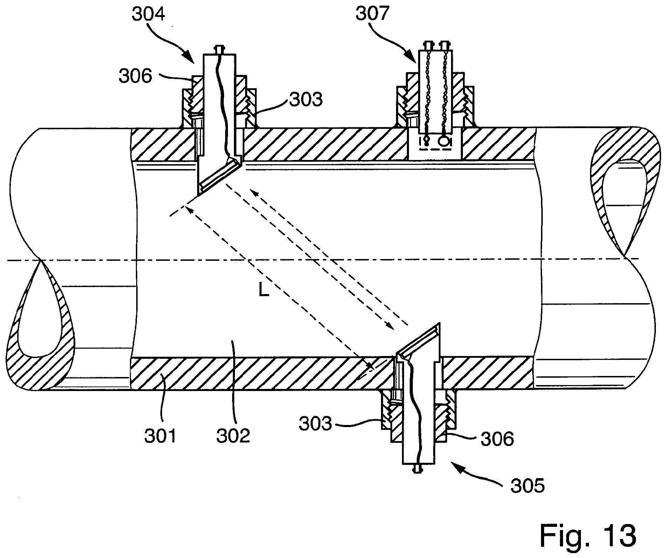

Fig. 13 zeigt eine weitere Ausführungsvariante einer erfindungsgemäßen Vorrichtung. Hierbei ist abermals ein Messrohr 301 vorgesehen, durch welches ein Messmedium 302, insbesondere ein Gasgemisch, fließt bzw. strömt. Auch in dieser Ausführungsvariante weist das Messrohr 301 zwei Stutzen für die Ultraschallwandler 304 und 305 auf, welche mit Hilfe eines Anschlussadapters 306 in dem jeweiligen Stutzen 303 festgelegt sind. Das Messrohr 301 weist zudem einen weiteren Stutzen 303 auf - in welchen ein Kombinationssensor 307 einbringbar ist. Dieser Kombinationssensor 307 vereint zumindest zwei der drei Sensoren 207-209 in sich und ermöglicht damit eine Temperatur- und Druckmessung oder eine Temperatur- und Feuchtemessung oder eine Druck- und Feuchtemessung. Die Messdaten können im Anschluss analog zu Fig. 12 an eine Auswerteeinheit übermittelt werden.

Der Stutzen für den Kombinationssensor steht dem Endnutzer als Anschluss zur Verfügung. Er muss diesen Anschluss allerdings nicht zwingend nutzen, sofern die Prozessdaten durch andere - nicht im Messgerät integrierte Messstellen - der Auswerteeinheit zur Verfügung gestellt werden.

**Patentansprüche**

**1.** Vorrichtung zur Bestimmung unbekannter Konzentrationen ($\chi_1, \chi_2, \chi_3$) von Komponenten

eines Gasgemisches (2), das durch eine Rohrleitung (1) strömt,
wobei ein Ultraschall-Durchflussmessgerät (31) vorgesehen ist, das die Schallgeschwindigkeit ($C_g$) des in einer Rohrleitung (1) strömenden Gasgemisches (2) bestimmt, und
wobei eine Auswerteeinheit (21) vorgesehen ist, die dazu eingerichtet ist anhand der über eine Ultraschallmessung ermittelten Schallgeschwindigkeit ($C_g$), eines ermittelten oder vorgegebenen Druckes (P) des Mediums und einer ermittelten oder vorgegebenen Temperatur (T) des Mediums anhand eines mathematisch-physikalischen Modells für reale Gase die unbekannten Konzentrationen ($\chi_1, \chi_2, \chi_3$) der Komponenten des Gasgemisches (2) zu bestimmen,

wobei das Gasgemisch (2) ein Biogas ist und sich im Wesentlichen aus drei Komponenten zusammensetzt, welche Komponenten Methan, Kohlendioxid und Wasserdampf sind, wobei die Auswerteeinheit (21) die Konzentration des Wasserdampfs ($\chi_3$) in Abhängigkeit von der Temperatur (T) und der Feuchte (RH) des Gasmisches (2) ermittelt und die Konzentration ($\chi_3$) des Wasserdampfes bei der Bestimmung der Konzentrationen ($\chi_1, \chi_2$) der beiden weiteren Komponenten berücksichtigt,
wobei die Ermittlung der unbekannten Konzentrationen ($\chi_1, \chi_2, \chi_3$) der einzelnen Komponenten des Gasgemisches durch iterative Berechnungen anhand von vorgegebenen Startwerten erfolgt.

2.  Vorrichtung nach einem der vorhergehenden Ansprüche,
wobei die Auswerteeinheit (21) dazu eingerichtet ist, die Konzentration ($\chi_3$) des Wasserdampfes in Abhängigkeit von der Temperatur (T) unter der Annahme einer relativen Feuchte (RH) von 100% zu ermitteln.

3.  Vorrichtung nach Anspruch 1 oder 2,

wobei eine Feuchtemesseinheit (15) vorgesehen ist, um die relative Feuchte (RH) des in der Rohrleitung (1) strömenden Gasgemisches (2) zu messen und
wobei die Auswerteeinheit (21) dazu eingerichtet ist, die Konzentration ($\chi_3$) des Wasserdampfes in Abhängigkeit von der Temperatur (T) und der gemessenen relativen Feuchte (RH) bestimmt.

4.  Vorrichtung nach einem der vorhergehenden Ansprüche,
wobei Druck (P) in der Rohrleitung (1) bei der Bestimmung der Konzentration ($\chi_3$) des Wasserdampfes in dem Gasgemisch (2) und/oder bei der Auswertung der Schallgeschwindigkeit anhand der realen Gasgleichung ($C_t$) berücksichtigt wird.

5.  Vorrichtung nach einem der vorhergehenden Ansprüche,

wobei ein Drucksensor (32) vorgesehen ist, um den Absolutdruck des in der Rohrleitung (1) strömenden Gasgemisches (2) zu bestimmen und
wobei die Auswerteeinheit (21) dazu eingerichtet ist, den gemessenen Absolutdruck bei der Bestimmung der Konzentration ($\chi_3$) des Wasserdampfes in dem Gasgemisch (2) und/oder bei der Ermittlung der Schallgeschwindigkeit anhand der realen Gasgleichung ($C_t$) zu berücksichtigen.

6.  Vorrichtung nach einem der vorhergehenden Ansprüche, **dadurch gekennzeichnet, dass** das Durchflussmessgerät eine Regel-/Auswerteschaltung (18) aufweist und dass ein Schaltkreis (20) des Temperatursensors in der Regel-/Auswerteschaltung (18) integriert vorliegt.

7.  Vorrichtung nach einem der vorhergehenden Ansprüche, **dadurch gekennzeichnet, dass** das Messrohr (1) eine mechanische Schnittstelle, insbesondere ein Bohrloch oder ein Anschlussstutzen, zur Festlegung eines Drucksensors (32) am oder im Messrohr (1) aufweist.

8.  Vorrichtung nach einem der vorhergehenden Ansprüche, **dadurch gekennzeichnet, dass** das Messrohr (1) einen Drucksensor (32) aufweist, welcher insbesondere über die Schnittstelle gemäß Anspruch 7 am oder im Messrohr festgelegt ist und dass der Datentransfer zwischen dem Drucksensor (32) und der Regel-/Auswerteschaltung (18) über eine analoge oder digitale Schnittstelle, insbesondere ein 4...20 mA Datentransfertschnittstelle oder eine Hart-Datentransfertschnittstelle, erfolgt.

9.  Vorrichtung nach einem der vorhergehenden Ansprüche, **dadurch gekennzeichnet, dass** die Auswerteeinheit (21) dazu eingerichtet ist, die Ermittlung der unbekannten Konzentrationen des Gasgemisches (2) unter Berücksichtigung der Art der Gaskomponenten, welche als Eingabewerte zur Verfügung gestellt werden vorzunehmen.

10. Vorrichtung nach einem der vorhergehenden Ansprüche,

wobei es sich bei der Rohrleitung (1) um ein Ableitrohr für das Gasgemisch (2) bzw. für das Biogas handelt, und
wobei die Rohrleitung (1) im oberen Bereich eines Fermenters (33), in den Biomaterial (34) eingefüllt ist, angeordnet ist.

11. Vorrichtung nach einem oder mehreren der vorhergehenden Ansprüche,
wobei das Ultraschall-Durchflussmessgerät (31) dazu ausgestaltet ist, die Strömungsgeschwindigkeit des in der Rohrleitung (1) strömenden Gasgemisches (2) nach dem Doppler- oder dem Laufzeitdifferenz-Prinzip zu ermitteln.

**12.** Vorrichtung nach einem der vorhergehenden Ansprüche,
wobei die Auswerteeinheit (21) dazu eingerichtet ist, anhand der ermittelten Konzentrationen ($\chi_1, \chi_2, \chi_3$) und der Molekulargewichte ($M_1, M_2, M_3$) der einzelnen Komponenten des Gasgemisches (2) bzw. des Biogases und anhand der ermittelten Strömungsgeschwindigkeit den Volumen- oder Massedurchfluss (Q) von zumindest einer der Komponenten des Gasgemisches (2) bzw. des Biogases zu ermitteln.

**13.** Vorrichtung nach einem der vorhergehenden Ansprüche,
wobei die Auswerteeinheit den Energiefluss bzw. die Energieproduktion des Biogases unter Berücksichtigung der ermittelten Konzentration ($\chi_1, \chi_2, \chi_3$) der einzelnen Komponenten und der Strömungsgeschwindigkeit des Biogases (2) in der Rohrleitung (1) ermittelt und bereitstellt.

**14.** Vorrichtung nach Anspruch 13,
wobei eine Anzeigeeinheit (22) vorgesehen ist, die eine Meldung ausgibt, wenn der Energiefluss bzw. die Energieproduktion des Biogases (2) einen vorgegebenen minimalen Grenzwert unterschreitet.

**15.** Vorrichtung nach Anspruch 10 oder einem der Ansprüche 11-14, wobei sie direkt oder indirekt von Anspruch 10 abhängig sind,
wobei eine Steuer-/Regeleinheit (18) vorgesehen ist, die Temperatur (T) in dem Fermenter und/oder die Beschickung des Fermenters mit Füllmaterial (34) so steuert, dass der Energiefluss bzw. die Energieproduktion (P) des Biogases (2) einen im wesentlichen konstanten Wert annimmt.

**16.** Vorrichtung nach Anspruch 15,

wobei eine Anlage zur Erzeugung von Biogas (2) aus einer Vielzahl von Fermentern (33) besteht und
wobei die Steuer-/Regeleinheit (18) die Temperatur von jeden einzelnen Fermenters (33) und/oder die Beschickung jedes einzelnen Fermenters (33) mit Füllmaterial (34) so steuert, dass der Energiefluss bzw. die Energieproduktion (P) des von der Anlage erzeugten Biogases (2) einen im wesentlichen konstanten Wert annimmt.

**17.** Verfahren zur Bestimmung der Konzentrationen ($\chi_1, \chi_2, \chi_3$) von gasförmigen Komponenten

eines Gasgemisches (2) mit einer Vorrichtung nach einem der vorigen Ansprüche, wobei das Gasgemisch durch eine Rohrleitung (1) strömt,
wobei die Schallgeschwindigkeit ($C_g$) des in einer Rohrleitung (1) strömenden Gasgemisches (2) über ein Ultraschall-Messverfahren bestimmt wird,
wobei die Temperatur (T) des in der Rohrleitung (1) strömenden Gasgemisches (2) bestimmt wird,
und wobei anhand der über das Ultraschall-Messverfahren ermittelten Schallgeschwindigkeit ($C_g$) und anhand der Schallgeschwindigkeit (Ct), die sich durch Auswertung der realen Gasgleichung ergibt, die Konzentrationen ($\chi_1, \chi_2, \chi_3$) der Komponenten des Gasgemischs (2) bestimmt werden,
wobei das ein Biogas ist und sich im Wesentlichen aus drei Komponenten zusammensetzt, welche Komponenten Methan, Kohlendioxid und Wasserdampf sind, wobei die Auswerteeinheit (21) die Konzentration des Wasserdampfs ($\chi_3$) in Abhängigkeit von der Temperatur (T) und der Feuchte (RH) des Gasgemisches (2) ermittelt und die Konzentration ($\chi_3$) des Wasserdampfes bei der Bestimmung der Konzentrationen ($\chi_1, \chi_2$) der beiden weiteren Komponenten berücksichtigt,
wobei die Ermittlung der Konzentrationen ($\chi_1, \chi_2, \chi_3$) der gasförmigen Komponenten des Gasgemisches durch iterative Berechnungen anhand von vorgegebenen Startwerten erfolgt.

**18.** Verfahren nach Anspruch 17,
wobei der Energiefluss bzw. die Energieproduktion (P) des Gasgemisches (2) unter Berücksichtigung der Konzentrationen ($\chi_1, \chi_2, \chi_3$) der einzelnen Komponenten und des Volumen- oder Massedurchflusses (Q) durch die Rohrleitung (1) bestimmt wird.

**19.** Verwendung einer Vorrichtung nach Anspruch 1 zur Ermittlung unbekannter Konzentrationen eines Gasgemisches, das durch eine Rohrleitung strömt, wobei das Gasgemisch ein Biogas ist und sich im Wesentlichen aus drei Komponenten zusammensetzt, welche Komponenten Methan, Kohlendioxid und Wasserdampf sind und wobei der Mediumsdruck in der Rohrleitung mehr als 10 bar, vorzugsweise mehr als 20 bar beträgt.

**Claims**

1. An apparatus for determining unknown concentrations ($X_1,X_2,X_3$) of components of a gas mixture (2) which is flowing through a pipeline (1),

   wherein an ultrasound flowmeter (31) is provided which determines the speed of sound ($C_g$) of the gas mixture (2) flowing in a pipeline (1), and
   wherein an evaluation unit (21) is provided which is designed to determine the unknown concentrations ($X_1,X_2,X_3$) of the components of the gas mixture (2) by reference to the speed of sound ($C_g$) determined via an ultrasound measurement, to a determined or specified pressure (P) of the medium and to a determined or specified temperature (T) of the medium using a mathematical and physical model for real gases,
   wherein the gas mixture (2) is a biogas is and is essentially made up of three components, which components are methane, carbon dioxide and steam, wherein the evaluation unit (21) establishes the concentration of the steam ($X_3$) as a function of the temperature (T) and the humidity (RH) of the gas mixture (2) and takes the concentration ($X_3$) of the steam into consideration when determining the concentrations ($X_1,X_2$) of the other two components,
   wherein the unknown concentrations ($X_1,X_2,X_3$) of the individual components of the gas mixture are established through iterative calculations by reference to specified starting values.

2. The apparatus as claimed in one of the preceding claims,
   wherein the evaluation unit (21) is designed to establish the concentration ($X_3$) of the steam as a function of the temperature (T) assuming a relative humidity (RH) of 100%.

3. The apparatus as claimed in claim 1 or 2,

   wherein a humidity measurement unit (15) is provided to measure the relative humidity (RH) of the gas mixture (2) flowing in the pipeline (1) and
   wherein the evaluation unit (21) is designed to determine the concentration ($X_3$) of the steam as a function of the temperature (T) and the measured relative humidity (RH).

4. The apparatus as claimed in one of the preceding claims,
   wherein pressure (P) in the pipeline (1) is taken into consideration when determining the concentration ($X_3$) of the steam in the gas mixture (2) and/or when evaluating the speed of sound by reference to the real gas equation (Ct).

5. The apparatus as claimed in one of the preceding claims,

   wherein a pressure sensor (32) is provided to determine the absolute pressure of the gas mixture (2) flowing in the pipeline (1) and
   wherein the evaluation unit (21) is designed to take the measured absolute pressure into consideration when determining the concentration ($X_3$) of the steam in the gas mixture (2) and/or
   when establishing the speed of sound by reference to the real gas equation (Ct).

6. The apparatus as claimed in one of the preceding claims, wherein the flowmeter has a control/evaluation circuit (18) and wherein a circuit (20) of the temperature sensor is present integrated in the control/evaluation circuit (18).

7. The apparatus as claimed in one of the preceding claims, wherein the measuring tube (1) has a mechanical interface, in particular a drill hole or a connecting piece, to affix a pressure sensor (32) on or in the measuring tube (1).

8. The apparatus as claimed in one of the preceding claims, wherein the measuring tube (1) has a pressure sensor (32) which, in particular, is affixed via the interface as claimed in claim 7 on or in the measuring tube and wherein data is transferred between the pressure sensor (32) and the control/evaluation circuit (18) via an analog or digital interface, in particular a 4... 20 mA data transfer interface or a Hart data transfer interface.

9. The apparatus as claimed in one of the preceding claims, wherein the evaluation unit (21) is designed to establish the unknown concentrations of the gas mixture (2) taking into consideration the type of gas components which are provided as input values.

10. The apparatus as claimed in one of the preceding claims,

wherein the pipeline (1) is a discharge pipe for the gas mixture (2) or for the biogas, and
wherein the pipeline (1) is arranged in the upper region of a fermenter (33) into which biomaterial (34) is filled.

11. The apparatus as claimed in one or more of the preceding claims,
wherein the ultrasound flowmeter (31) is configured to establish the flow rate of the gas mixture (2) flowing in the pipeline (1) according to the Doppler or the transit-time difference principle.

12. The apparatus as claimed in one of the preceding claims,
wherein the evaluation unit (21) is designed to establish the volume or mass flow (Q) of at least one of the components of the gas mixture (2) or of the biogas by reference to the established concentrations ($X_1,X_2,X_3$) and the molecular weights ($M_1,M_2,M_3$) of the individual components of the gas mixture (2) or of the biogas and by reference to the established flow rate.

13. The apparatus as claimed in one of the preceding claims,
wherein the evaluation unit establishes and provides the energy flow or the energy production of the biogas taking into consideration the established concentration ($X_1,X_2,X_3$) of the individual components and the flow rate of the biogas (2) in the pipeline (1).

14. The apparatus as claimed in claim 13, wherein a display unit (22) is provided which emits a message when the energy flow or the energy production of the biogas (2) falls below a specified minimum limit value.

15. The apparatus as claimed in claim 10 or one of claims 11-14, wherein they are directly or indirectly dependent on claim 10,
wherein a control/regulation unit (18) is provided which controls the temperature (T) in the fermenter and/or the charging of the fermenter with filling material (34) such that the energy flow or the energy production (P) of the biogas (2) assumes an essentially constant value.

16. The apparatus as claimed in claim 15,

    wherein an attachment for generating biogas (2) consists of a plurality of fermenters (33)
    and
    wherein the control/regulation unit (18) controls the temperature of each individual fermenter (33) and/or the charging of each individual fermenter (33) with filling material (34) such that the energy flow or the energy production (P) of the biogas (2) generated by the attachment assumes an essentially constant value.

17. A method for determining the concentrations ($X_1,X_2,X_3$) of gaseous components of a gas mixture (2) having an apparatus as claimed in one of the preceding claims, wherein the gas mixture flows through a pipeline (1),

    wherein the speed of sound ($C_g$) of the gas mixture (2) flowing in a pipeline (1) is determined via an ultrasound measurement method,
    wherein the temperature (T) of the gas mixture (2) flowing in the pipeline (1) is determined,
    and wherein the concentrations ($X_1,X_2,X_3$) of the components of the gas mixture (2) are determined by reference to the speed of sound ($C_g$) established via the ultrasound measurement method and by reference to the speed of sound ($C_t$) resulting from the evaluation of the real gas equation,
    wherein this is a biogas and is essentially made up of three components, which components are methane, carbon dioxide and steam, wherein the evaluation unit (21) establishes the concentration of the steam ($X_3$) as a function of the temperature (T) and the humidity (RH) of the gas mixture (2) and takes the concentration ($X_3$) of the steam into consideration when determining the concentrations ($X_1,X_2$) of the other two components,
    wherein the concentrations ($X_1,X_2,X_3$) of the gaseous components of the gas mixture are established through iterative calculations by reference to specified starting values.

18. The method as claimed in claim 17,

    wherein the energy flow or the energy production (P) of the gas mixture (2) is determined taking into consideration the concentrations ($X_1,X_2,X_3$) of the individual components and
    the volume or mass flow (Q) through the pipeline (1).

19. Use of an apparatus as claimed in claim 1 for establishing unknown concentrations of a gas mixture which is flowing through a pipeline, wherein the gas mixture is a biogas and is essentially made up of three components, which components are methane, carbon dioxide and steam, and wherein the medium pressure in the pipeline is more than 10 bar, preferably more than 20 bar.

## Revendications

1. Dispositif destiné à la détermination des concentrations inconnues ($x_1$, $x_2$, $x_3$) de composants d'un mélange gazeux (2) qui s'écoule dans une conduite (1),

   dispositif pour lequel il est prévu un débitmètre à ultrasons (31), lequel détermine la vitesse du son ($C_g$) du mélange gazeux (2) qui s'écoule dans une conduite (1), et
   dispositif pour lequel il est prévu une unité d'évaluation (21), laquelle est conçue pour déterminer - à l'aide de la vitesse du son ($C_g$) déterminée par une mesure ultrasonique, d'une pression (P) déterminée ou prédéfinie du produit et d'une température (T) déterminée ou prédéfinie du produit - les concentrations inconnues ($x_1$, $x_2$, $x_3$) des composants du mélange gazeux (2),
   le mélange gazeux (2) étant un biogaz et se composant essentiellement de trois composants, lesquels composants sont le méthane, le dioxyde de carbone et la vapeur d'eau, l'unité d'évaluation (21) déterminant la concentration de la vapeur d'eau (13) en fonction de la température (T) et de l'humidité (RH) du mélange gazeux (2) et déterminant la concentration ($x_3$) de la vapeur d'eau lors de la détermination des concentrations ($x_1$, $x_2$) des deux autres composants,
   la détermination des concentrations inconnues ($x_1$, $X_2$, $X_3$) des différents composants du mélange gazeux étant effectuée par des calculs itératifs à l'aide de valeurs de départ prédéfinies.

2. Dispositif selon la revendication précédente,
   pour lequel l'unité d'évaluation (21) est conçue pour déterminer la concentration ($x_3$) de la vapeur d'eau en fonction de la température (T) en supposant une humidité relative (HR) de 100 %.

3. Dispositif selon la revendication 1 ou 2,
   pour lequel une unité de mesure d'humidité (15) est prévue pour mesurer l'humidité relative (RH) du mélange gazeux (2) s'écoulant dans la conduite (1) et pour lequel l'unité d'évaluation (21) est conçue pour déterminer la concentration ($x_3$) de la vapeur d'eau en fonction de la température (T) et de l'humidité relative (RH) mesurée.

4. Dispositif selon l'une des revendications précédentes,
   pour lequel la pression (P) régnant dans la conduite (1) est prise en compte lors de la détermination de la concentration ($x_3$) de la vapeur d'eau dans le mélange gazeux (2) et/ou lors de l'évaluation de la vitesse du son à partir de l'équation des gaz réels ($C_t$).

5. Dispositif selon l'une des revendications précédentes,

   pour lequel un capteur de pression (32) est prévu pour déterminer la pression absolue du mélange gazeux (2) s'écoulant dans la conduite (1),
   l'unité d'évaluation (21) étant conçue pour prendre en compte la pression absolue mesurée lors de la détermination de la concentration ($x_3$) de la vapeur d'eau dans le mélange gazeux (2) et/ou lors de la détermination de la vitesse du son à l'aide de l'équation des gaz réels ($C_t$).

6. Dispositif selon l'une des revendications précédentes, **caractérisé en ce que** le débitmètre comporte un circuit de régulation/d'évaluation (18) et **en ce qu'**un circuit (20) du capteur de température est intégré dans le circuit de régulation/d'évaluation (18).

7. Dispositif selon l'une des revendications précédentes, **caractérisé en ce que** le tube de mesure (1) présente une interface mécanique, notamment un trou de perçage ou une tubulure de raccordement, laquelle interface est destinée à fixer un capteur de pression (32) sur ou dans le tube de mesure (1).

8. Dispositif selon l'une des revendications précédentes, **caractérisé en ce que** le tube de mesure (1) comporte un capteur de pression (32), lequel est fixé sur ou dans le tube de mesure, notamment par l'intermédiaire de l'interface selon la revendication 7, et **en ce que** le transfert de données entre le capteur de pression (32) et le circuit de régulation/d'évaluation (18) s'effectue par l'intermédiaire d'une interface analogique ou numérique, notamment une interface de transfert de données 4...20 mA ou une interface de transfert de données Hart.

9. Dispositif selon l'une des revendications précédentes, **caractérisé en ce que** l'unité d'évaluation (21) est conçue pour déterminer les concentrations inconnues du mélange gazeux (2) en tenant compte de la nature des composants gazeux qui sont mis à disposition comme valeurs d'entrée.

10. Dispositif selon l'une des revendications précédentes,

> pour lequel la conduite (1) est une conduite d'évacuation pour le mélange gazeux (2) ou pour le biogaz, et
> pour lequel la conduite (1) est disposée dans la partie supérieure d'un fermenteur (33) dans lequel est introduit le biomatériau (34).

11. Dispositif selon l'une ou plusieurs des revendications précédentes,
pour lequel le débitmètre à ultrasons (31) est conçu pour déterminer la vitesse d'écoulement du mélange gazeux (2) s'écoulant dans la conduite (1) selon le principe Doppler ou le principe de la différence de temps de transit.

12. Dispositif selon l'une des revendications précédentes,
pour lequel l'unité d'évaluation (21) est conçue pour déterminer - à l'aide des concentrations ($x_1$, $x_2$, $x_3$) et des poids moléculaires ($M_1$, $M_2$, $M_3$) déterminés des différents composants du mélange gazeux (2) ou du biogaz et à l'aide de la vitesse d'écoulement déterminée - le débit volumique ou massique (Q) d'au moins un des composants du mélange gazeux (2) ou du biogaz.

13. Dispositif selon l'une des revendications précédentes,
pour lequel l'unité d'évaluation détermine et met à disposition le flux d'énergie ou la production d'énergie du biogaz en tenant compte de la concentration ($x_1$, $x_2$, $x_3$) déterminée des différents composants et de la vitesse d'écoulement du biogaz (2) dans la conduite (1).

14. Dispositif selon la revendication 13,
pour lequel une unité d'affichage (22) est prévue, laquelle émet un message lorsque le flux d'énergie ou la production d'énergie du biogaz (2) passe en dessous d'une valeur limite minimale prédéfinie.

15. Dispositif selon la revendication 10 ou l'une des revendications 11 à 14,
le dispositif dépendant directement ou indirectement de la revendication 10, dispositif pour lequel il est prévu une unité de commande/régulation (18), laquelle contrôle la température (T) dans le fermenteur et/ou le chargement du fermenteur en matériau de remplissage (34) de telle sorte que le flux ou la production d'énergie (P) du biogaz (2) prenne une valeur pour l'essentiel constante.

16. Dispositif selon la revendication 15,

> pour lequel une installation de production de biogaz (2) est constituée d'une pluralité de fermenteurs (33) et l'unité de commande/régulation (18) contrôlant la température de chaque fermenteur individuel (33) et/ou l'alimentation de chaque fermenteur individuel (33) en matériau de remplissage (34) de telle sorte que le flux ou la production d'énergie (P) du biogaz (2) produit par l'installation prenne une valeur pour l'essentiel constante.

17. Procédé destiné à la détermination des concentrations ($x_1$, $x_2$, $x_3$) de composants gazeux d'un mélange gazeux (2) avec un dispositif selon l'une des revendications précédentes, le mélange gazeux s'écoulant à travers une conduite (1),

> la vitesse du son ($C_g$) du mélange gazeux (2) s'écoulant dans une conduite (1) étant déterminée par un procédé de mesure à ultrasons,
> la température (T) du mélange gazeux (2) s'écoulant dans la conduite (1) étant déterminée,
> et les concentrations des composants du mélange gazeux (2) étant déterminées à l'aide de la vitesse du son ($C_g$) déterminée par le procédé de mesure par ultrasons et à l'aide de la vitesse du son ($C_t$) qui résulte de l'évaluation de l'équation des gaz réels,
> le gaz en question étant un biogaz et constitué essentiellement de trois composants, lesquels composants sont le méthane, le dioxyde de carbone et la vapeur d'eau, l'unité d'évaluation (21) déterminant la concentration de la vapeur d'eau ($X_3$) en fonction de la température (T) et de l'humidité (RH) du mélange gazeux (2) et tenant compte de la concentration ($X_3$) de la vapeur d'eau lors de la détermination des concentrations ($x_1$, $x_2$) des

deux autres composants,
la détermination des concentrations ($x_1$, $x_2$, $x_3$) des composants gazeux du mélange gazeux étant effectuée par des calculs itératifs à l'aide de valeurs de départ prédéfinies.

18. Procédé selon la revendication 17,
pour lequel le flux d'énergie ou la production d'énergie (P) du mélange gazeux (2) est déterminé en tenant compte des concentrations ($x_1$, $x_2$, $x_3$) des différents composants et du débit volumique ou massique (Q) à travers la conduite (1).

19. Utilisation d'un dispositif selon la revendication 1, lequel dispositif est destiné à la détermination de concentrations inconnues d'un mélange gazeux qui s'écoule dans une conduite, le mélange gazeux étant un biogaz et constitué pour l'essentiel de trois composants, lesquels composants sont le méthane, le dioxyde de carbone et la vapeur d'eau, et la pression du produit dans la conduite étant supérieure à 10 bar, de préférence supérieure à 20 bar.

Fig. 1

Fig. 2

Fig. 3

Fig. 4

Fig. 5

Fig. 6

Fig. 7

Fig. 8

Fig. 9

Legend:
- Methan
- Ethan
- Ethen
- Propan
- Propen
- Butan
- CO
- CO2
- N2
- O2
- Ammoniak
- Kr
- Xe
- Argon

Schallgeschwindigkeit [m/s]

Temperatur [°C]

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008003627 A1
- EP 0686255 B1
- US 4484478 A
- DE 4335369 C1
- DE 29803911 U1
- DE 4336370 C1
- US 4598593 A